# EUROPÄISCHE PATENTSCHRIFT

(11) **EP 2 494 223 B1**
(45) Veröffentlichungstag und Bekanntmachung des Hinweises auf die Patenterteilung: **14.12.2016**
(21) Anmeldenummer: 10786991.9
(22) Anmeldetag: 18.10.2010
(51) Int. Cl.: F16D 3/66, F16F 15/121, F16F 15/123

(54) **KUPPLUNGSEINRICHTUNG**
CLUTCH DEVICE
DISPOSITIF D'EMBRAYAGE

(30) Priorität: 29.10.2009 DE 102009051243; 21.12.2009 DE 102009059738; 29.06.2010 DE 102010025411; 02.08.2010 DE 102010033064
(43) Veröffentlichungstag der Anmeldung: 05.09.2012
(73) Patentinhaber: Schaeffler Technologies AG & Co. KG, 91074 Herzogenaurach (DE)
(72) Erfinder: CHAMBRION, Martin, 67850 Herrlisheim (FR); SIMON, Yannick, 3853 Münchenbuchsee (CH); RABER, Christoph, 66564 Ottweiler-Steinbach (DE)
(86) Internationale Anmeldenummer: PCT/DE2010/001226
(87) Internationale Veröffentlichungsnummer: WO 2011/050774

(56) Entgegenhaltungen:
- WO-A1-95/31653
- DE-A1- 3 206 068
- JP-A- 2005 344 920

## Beschreibung

Die Erfindung betrifft eine Kupplungseinrichtung eines Fahrzeugs, insbesondere eine Booster-Kupplung.

Um die Betätigungskräfte bei einer Kupplung signifikant abzusenken, müssen neue Wege beschritten werden. Aus einem hausinternen Stand der Technik ist hierfür der Einsatz einer sogenannten Booster-Kupplung bekannt. Dieses Kupplungssystem weist eine Vorsteuerkupplung und eine Hauptkupplung auf. Hierbei sind beide Elemente durch ein Rampensystem über Wälzkörper miteinander verbunden. Beim Schließen der Vorsteuerkupplung werden durch das aufgebaute Moment die Rampen des Rampensystems verdreht und so die Hauptkupplung geschlossen. Die für die Betätigung der Hauptkupplung erforderliche Energie wird bei diesem System vom Motor geliefert und es muss von außen nur die Kraft zum Schließen der Vorsteuerkupplung aufgebracht werden.

Eine weitere Kupplungseinrichtung mit einer Vorsteuerkupplung und einer Hauptkupplung ist aus dem Dokument JP 2005 344920 A bekannt.

Aufgabe der vorliegenden Erfindung ist es eine verbesserte Kupplungseinrichtung bereitzustellen.

Diese Aufgabe wird durch eine Kupplungseinrichtung gemäß dem Patentanspruch 1 gelöst.

Gemäß der Erfindung wird eine Kupplungseinrichtung bereitgestellt, wobei Kupplungseinrichtung, insbesondere Booster-Kupplungseinrichtung, ein erstes Kupplungselement und ein zweites Kupplungselement aufweist, wobei eine Torsionsfedereinrichtung vorgesehen ist, welche das erste Kupplungselement und das zweite Kupplungselement miteinander koppelt oder verbindet, wobei die Torsionsfedereinrichtung so ausgebildet ist, dass sie eine mehrstufige Federkennlinie aufweist oder bereitstellt.

Dies hat den Vorteil, dass die Federkennlinie durch ihre Abstufung an einen geeigneten oder gewünschten Kennlinienverlauf anpassbar ist. So kann die Federkennlinie der Torsionsfedereinrichtung an eine Belagkennlinie oder eine exponentiell verlaufende Kennlinie angenährt werden kann. Dadurch kann z.B. bei einer Booster-Kupplung als ein Beispiel für eine Kupplungseinrichtung die Anpresskraft der Hauptkupplung einem zu übertragenden Motordrehmoment besser angepasst werden.

Vorteilhafte Ausgestaltungen und Weiterbildungen der Erfindung ergeben sich aus den Unteransprüchen sowie der Beschreibung unter Bezugnahme auf die Zeichnungen.

In einer erfindungsgemäßen Ausführungsform ist das erste Kupplungselement ein Kupplungsflansch und das zweite Kupplungselement eine Kupplungsnabe.

Gemäß einer weiteren Ausführungsform weist die Torsionsfedereinrichtung eine Druckfedereinrichtung auf, welche wenigstens eine Druckfeder aufweist, welche durch das erste Kupplungselement bzw. den Kupplungsflansch und das zweite Kupplungselement bzw. die Kupplungsnabe zusammendrückbar in der Kupplungseinrichtung vorgesehen ist.

In einer anderen Ausführungsform weist die Torsionsfedereinrichtung eine Blattfedereinrichtung auf, wobei die Blattfedereinrichtung insbesondere an der Kupplungsnabe vorgesehen ist, und insbesondere wenigstens ein Blattfederpakt bestehend aus wenigstens einer Blattfeder aufweist. Blattfedern haben den Vorteil, dass sie eine hohe Steifigkeit aufweisen im Gegensatz zu den Druckfedern und dadurch verschiedene Steifigkeiten bei der Torsionsfedereinrichtung bereitgestellt und kombiniert werden können.

In einer Ausführungsform ist die Blattfedereinrichtung derart mit der Kupplungsnabe verbunden, so dass sie bei einer zweistufigen Federkennlinie der Torsionsfedereinrichtung mit dem Kupplungsflansch in einem Kontaktbereich in Kontakt bringbar ist. Bei einer zweistufigen Torsionsfedereinrichtung wird aber kein dritter zusätzlicher Kontakt bereitgestellt, beispielsweise von Blattfeder und Kupplungsnabe z.B. am Ende oder im Bereich des Endes der Blattfederaufnahme in der Nabe.

Gemäß einer weiteren Ausführungsform wird die Blattfedereinrichtung derart mit der Kupplungsnabe verbunden, so dass sie bei einer dreistufigen Federkennlinie der Torsionsfedereinrichtung mit dem Kupplungsflansch in einem Kontaktbereich in Kontakt bringbar und außerdem mit der Kupplungsnabe in einem Kontaktbereich in Kontakt bringbar ist. Dadurch kann eine exponentielle Federkennlinie gut angenähert werden.

In einer weiteren Ausführungsform weist die Kupplungsnabe eine jeweilige Blattfederaufnahme auf, wobei die Blattfederaufnahme als eine Vertiefung ausgebildet ist, in welcher die Blattfedereinrichtung aufgenommen und befestigt ist, wobei die Blattfedereinrichtung aus der Blattfederaufnahme heraussteht, um mit einem Absatz oder Anschlag des Kupplungsflansches in Kontakt bringbar zu sein, wobei der Absatz oder Anschlag des Kupplungsflansch als ein Vorsprung oder eine Vertiefung bzw. Aussparung ausgebildet ist.

In einer anderen Ausführungsform weist die Aufnahme der Blattfedereinrichtung bei einer dreistufigen Federkennlinie der Torsionsfedereinrichtung außerdem einen Kontaktbereich auf, mit welchem die Blattfedereinrichtung zusätzlich zu einem Kontakt mit dem Kupplungsflansch in Kontakt mit der Kupplungsnabe bringbar ist, beispielsweise einem Ende oder Endbereich der Blattfederaufnahme in der Nabe. Dadurch kann die Steifigkeit zusätzlich erhöht werden.

In einer weiteren Ausführungsform ist die Eigensteifigkeit des ersten Kupplungselements bzw. Kupplungsflansches und/oder des zweiten Kupplungselements bzw. der Kupplungsnabe variabel ausgebildet, so dass beispielsweise auf eine Blattfedereinrichtung verzichtet werden kann und eine Annäherung der Federkennlinie der Torsionsfedereinrichtung an eine exponentielle Kennlinie erreicht werden kann.

Die Erfindung wird nachfolgend anhand der in den schematischen Figuren der Zeichnungen angegebenen Ausführungsbeispiele näher erläutert. Es zeigen:
Fig. 1 eine translatorische Darstellung einer Booster-Kupplungseinrichtung;
Fig. 2 eine Darstellung der Drehmomentverteilung in der Kupplungseinrichtung gemäß Fig. 1;
Fig. 3 eine translatorische Darstellung einer Booster-Kupplungseinrichtung mit einem Dreh- momentfühler;
Fig. 4 eine translatorische Darstellung einer Booster-Kupplungseinrichtung mit einem Drehmomentfühler bei einem Lastwechsel;
Fig. 5 ein Diagramm mit der Kennlinie des Rampenmoments und der Torsionsfeder;
Fig. 6 eine schematische Ansicht eines Flansches und einer Nabe einer Kupplungsvor- richtung in der Nulllage;
Fig. 7 eine weitere schematische Ansicht des Flansches und der Nabe der Kupplungsvor- richtung gemäß Fig. 6 bei einem kleinen Winkel;
Fig. 8 eine weitere schematische Ansicht des Flansches und der Nabe der Kupplungsvor- richtung gemäß Fig. 7 bei einem Winkel der größer als ein Winkel α und kleiner als ein Winkel β ist;
Fig. 9 eine weitere schematische Ansicht des Flansches und der Nabe der Kupplungs- vorrichtung gemäß Fig. 8 bei einem Winkel der größer als der Winkel β ist;
Fig. 10 eine Perspektivansicht einer Kupplungseinrichtung;
Fig. 11 eine Draufsicht der Kupplungseinrichtung gemäß Fig. 10;
Fig. 12 eine Ausschnitt der Kupplungseinrichtung gemäß Fig. 11; und
Fig. 13 eine Perspektivansicht der Nabe der Kupplungseinrichtung gemäß Fig. 10-12.

Gleiche Bezugszeichen bezeichnen in den nachfolgenden Figuren gleich oder ähnliche Bauteile, sofern nicht Gegenteiliges erwähnt wird.

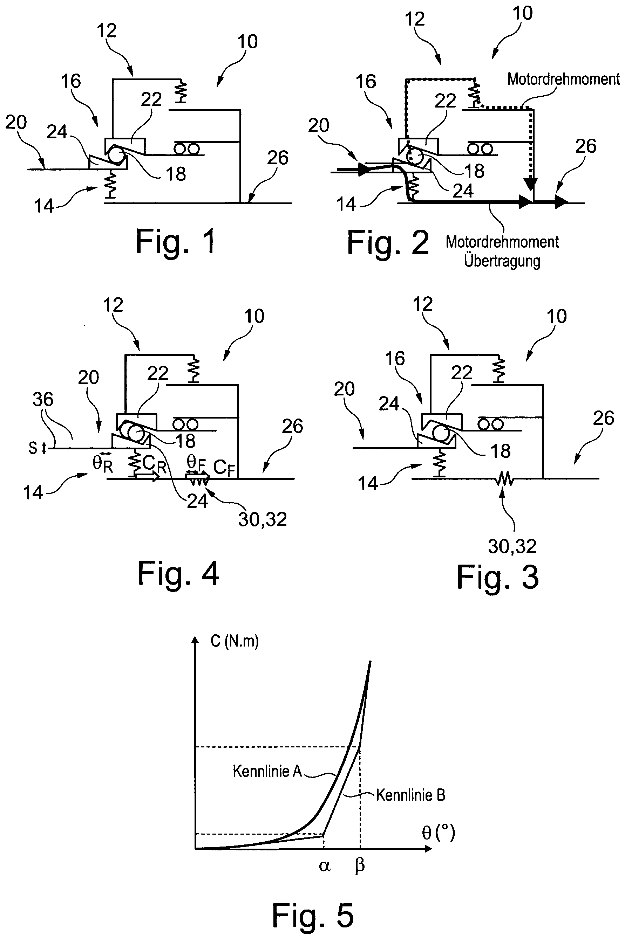

Die Erfindung, wie im Nachfolgenden anhand der Fig. 1-13 beschrieben, ist auf eine Kupplungseinrichtung 10 mit einer ersten Kupplung 12 bzw. Vorsteuerkupplung 12 und einer zweiten Kupplung 14 bzw. Hauptkupplung 14 gerichtet, die durch ein Rampensystem 16 über Wälzkörper 18 miteinander verbunden sind. Die erfindungsgemäße Kupplungseinrichtung 10, wie hier z.B. Booster-Kupplungseinrichtung, kann insbesondere bei einem Fahrzeug, wie beispielsweise einem PKW, einem LKW oder einem Motorrad eingesetzt werden.

In Fig. 1 ist zunächst eine translatorische Darstellung einer Kupplungseinrichtung 10, hier Booster-Kupplungseinrichtung, gezeigt. Die Kupplungseinrichtung 10 erlaubt eine Reduzierung der Ausrückkraft durch die Verwendung eines Motormoments eines Motors 20. Die Kupplungseinrichtung 10 weist hierbei eine erste Kupplung 12 oder eine Vorsteuerkupplung 12 und eine zweite Kupplung 14 oder Hauptkupplung 14 auf, die durch ein Rampensystem 16 über Wälzkörper 18 miteinander verbunden sind. Das Rampensystem 16 weist hierbei beispielsweise eine erste und zweite Rampe 22, 24 auf, welche über entsprechende Wälzkörper 18 miteinander verbunden sind. Das Rampensystem 16 in Fig. 1 bildet beispielsweise eine Kugelrampe. Dabei sind in Fig. 1 außerdem der Motor 20 und ein Getriebe 26 gezeigt, die mit der Booster-Kupplungseinrichtung 10 verbunden sind. Bei der in Fig. 1 gezeigten translatorischen Darstellung einer Kupplungseinrichtung 10, entsprechen eine vertikale Bewegung in der Figur einer axialen Bewegung in der Kupplungseinrichtung und eine horizontale Bewegung in der Figur einer Drehung oder Verdrehung der Kupplungseinrichtung.

In Fig. 2 ist die Booster-Kupplungseinrichtung 10 gemäß Fig. 1, mit ihrer Hauptkupplung 14 und ihrer Vorsteuerkupplung 12, sowie der Motor 20 und das Getriebe 26 gezeigt. Dabei ist die Kupplungsfunktion der Kupplungseinrichtung 10 dargestellt und eine Drehmomentverteilung 28. Eine Kupplungsbetätigung wirkt hierbei auf die Vorsteuerkupplung 12 oder erste Kupplung 12. Die Vorsteuerkupplung 12 oder erste Kupplung 12 entnimmt dabei beispielsweise etwa ein Zehntel des max. Motordrehmoments des Motors 20, welches die Kugelrampe oder das Rampensystem 16 in eine axiale Kraft übersetzt. Diese Kraft wirkt als Anpresskraft in der Hauptkupplung 14 oder zweiten Kupplung 14, die die Mehrheit der Motordrehmomentübertragung übernehmen kann.

Das Problem, das sich hierbei ergibt ist, dass wenn die Kupplungseinrichtung 10 so konstruiert ist, sich die Rampen 22, 24 der Kugelrampe bzw. des Rampensystems 16 verklemmen können. Dieses Problem kann nun mit einem Drehmomentfühler bzw. einer Drehmomentfühlereinrichtung gelöst werden.

In Fig. 3 ist dabei eine translatorische Darstellung der Booster-Kupplungseinrichtung 10 mit einer Drehmomentfühlereinrichtung 30 gezeigt. Die Kupplungseinrichtung 10 weist dabei eine erste Kupplung 12 oder Vorsteuerkupplung 12 und eine zweite Kupplung 14 oder Hauptkupplung 14 auf. Des Weiteren sind ein Motor 20 und ein Getriebe 26 gezeigt, welche mit der Kupplungseinrichtung 10 verbunden oder gekoppelt sind. Die Vorsteuerkupplung 12 und die Hauptkupplung 14 sind durch ein Rampensystem 16, welches eine erste und zweite Rampe 22, 24 aufweist, über Wälzkörper 18 miteinander verbunden.

Konstruktiv kann man sich die Drehmomentfühlereinrichtung 30 als eine Torsionsfedereinrichtung 32 vorstellen, die sich zwischen dem Getriebe 26 und Hauptkupplung 14 bzw. zweiten Kupplung 14 befindet. Wenn nun ein Lastwechsel auftritt, so ändert sich das übergetragene Drehmoment in dem Antriebsstrang, was wiederum die Spannung der Torsionsfedereinrichtung 32 ändert.

Bisher gab es keine Richtlinie bezüglich der Auslegung der Torsionsfeder bzw. Torsionsfedereinrichtung 32. Auch wenn sich die Rampen 22, 24 des Rampensystems 16 nicht verklemmen sollten, so reagiert die Kupplungseinrichtung 10 bei einem Lastwechsel doch sehr empfindlich. Das Problem besteht darin, dass die Kraft-Weg Belagkennlinie nicht linear ist, sondern exponentiell. Bei der Auslegung der Torsionsfedereinrichtung 32 soll daher die Torsionsfederkennlinie 34 vorzugsweise exponentiell oder im Wesentlichen exponentiell sein, um eine saubere bzw. sichere Lösung der Rampen 22, 24 zu gewährleisten.

Das kann wie folgt erklärt werden. Beim Lastwechsel ändert sich das zu übertragende Drehmoment. Das Ziel ist es nun, die Anpresskraft der Hauptkupplung 14 oder zweiten Kupplung 14 diesem zu übertragenden Drehmoment anzupassen.

In Fig. 4 ist eine translatorische Darstellung einer weiteren Booster-Kupplungseinrichtung 10 mit einer Drehmomentfühlereinrichtung 30 gezeigt, sowie ein Motor 20 und ein Getriebe 26, die mit der Booster-Kupplungseinrichtung 10 verbunden sind. Wie zuvor beschrieben weist die Kupplungseinrichtung 10 eine erste Kupplung 12 oder Vorsteuerkupplung 12 und eine zweite Kupplung 14 oder Hauptkupplung 14 auf, die durch ein Rampensystem 16, welches zwei Rampen 22, 24 aufweist, über Wälzkörper 18 miteinander verbunden sind. Anhand von Fig. 4 wird hierbei erläutert, wie die Torsionsfedereinrichtung 32 weiter optimiert werden kann. Fig. 4 zeigt dabei das Verhalten der Booster-Kupplungseinrichtung 10, welche eine Drehmomentfühlereinrichtung 30 aufweist, bei einem Lastwechsel.

Ein übertragbares Drehmoment C_{R} entspricht dabei einer Hauptkupplungsanpresskraft. Die Hauptkupplungsanpresskraft entspricht einer axialen Verschiebung s einer Anpressplatte 36 (z.B. Lammelenpaket). Eine axiale Verschiebung s entspricht wiederum einer Verdrehung einer Rampe 22, 24 um einen Winkel θ_{R}. Deswegen entspricht ein übertragbares Drehmoment C_{R} einer Verdrehung der Rampe 22, 24 um einen Winkel θ_{R}. Die Kennlinie A in der nachfolgenden Fig. 5 entspricht hierbei der Rampenmomentkennlinie.

Setzt man eine Drehmomentfühlereinrichtung 30 in dem Antriebsstrang ein, so wird eine Momentvariation beim Lastwechsel eine Verdrehung verursachen, da der Torsionsfederwinkel θ_{F} einem Drehmoment C_{F} entspricht. Die Kennlinie B in der nachfolgenden Fig. 5 entspricht hierbei der Torsionsfederkennlinie.

In Fig. 5 ist ein Diagramm gezeigt, in welchem eine Kennlinie A des Rampenmoments und eine Kennlinie B der Torsionsfeder abgebildet ist. Die beiden Achsen des Diagramms geben ein Drehmoment C in Nm in Abhängigkeit von einem Drehwinkel θ an. Die Torsionsfederkennlinie bzw. Kennlinie B wird nun vorzugsweise so ausgelegt, dass sie gleich oder möglichst annähernd gleich der Rampenmomentkennlinie bzw. Kennlinie A ist. In dem Fall, dass diese Bedingung nicht erfüllt wird, können die Rampen des Rampensystems verklemmt bleiben oder kann die ganze Kupplungseinrichtung das übertragbare Moment unregelmäßig verstellen oder einstellen.

Ist die Torsionsfedersteifigkeit geringer als die Rampenmomentsteifigkeit, so verdreht sich die Torsionsfedereinrichtung oder Torsionsfeder zu stark, so dass eine Rampe eine Position einnimmt, bei welchem die Anpresskraft gegenüber dem zu übertragenden Drehmoment zu gering ist. Wegen diesem Ungleichgewicht soll die Rampe sich in der Gegenrichtung verdrehen oder drehen.

Ist die Torsionsfedersteifigkeit größer als die Rampenmomentsteifigkeit, so kann die Rampe verklemmt bleiben. Je näher die Kennlinien A und B sind, desto besser wird daher ein Lastwechseln erfolgen.

Es wird daher eine mehrstufiger Drehmomentfühlereinrichtung oder eine mehrstufige Torsionsfedereinrichtung verwendet, deren Kennlinie so nah wie möglich an der Rampenmomentkennlinie liegt. Beispielsweise wird eine dreistufige Torsionsfedereinrichtung bereitgestellt, deren Kennlinie möglichst nah an der Rampenmomentkennlinie liegt.

Wie in Fig. 5 gezeigt ist, weist die Torsionsfederung bzw. deren Kennlinie B einen dreistufigen Aufbau auf. Die dreistufige Kennlinie B wird dadurch erreicht, in dem z.B. eine Druckfedereinrichtung, welche wenigstens eine Druckfeder aufweist, während der ersten Stufe wirkt und danach die Druckfedereinrichtung und eine Blattfedereinrichtung zusammenwirken.

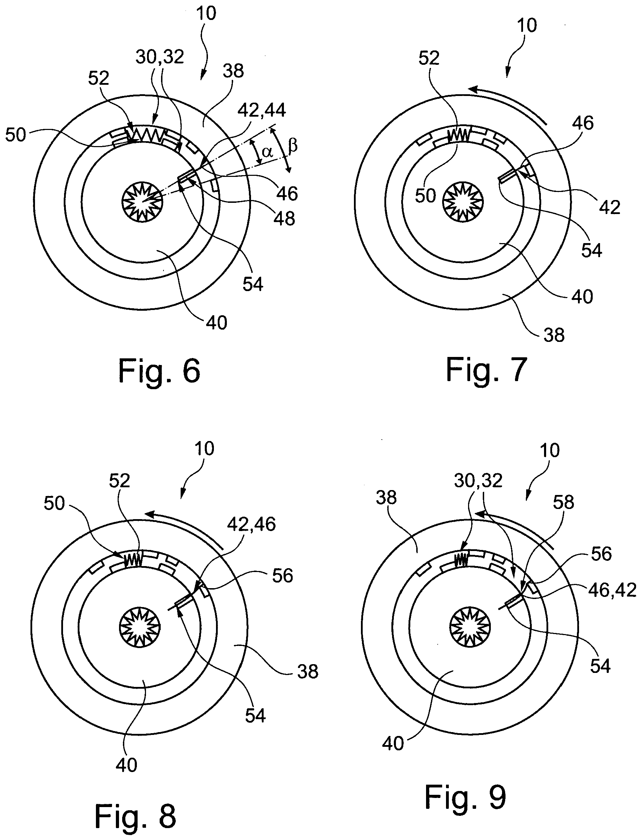

In Fig. 6 ist eine schematische und vereinfachte Darstellung des Zusammenwirkens eines Flansches 38 und einer Nabe 40 einer Kupplungseinrichtung 10 gezeigt, wobei eine mehrstufiger Drehmomentfühlereinrichtung 30 bzw. eine mehrstufige Torsionsfedereinrichtung 32 vorgesehen ist. Genauer gesagt ist eine dreistufige Torsionsfedereinrichtung 32 vorgesehen. Fig. 6 zeigt dabei den Torsionsfederzustand in einer Nulllage. Wie in Fig. 6 gezeigt ist, weist die Torsionsfedereinrichtung 32 ein Blattfedereinrichtung 42 auf, welche wenigstens ein Blattfederpaket 44 bestehend aus wenigstens einer Blattfeder 46 aufweist. Die Blattfeder 46 ist dabei in einer Blattfederaufnahme 48 z.B. in Form einer Vertiefung in der Nabe 40 befestigt. Des Weiteren weist die Torsionsfedereinrichtung 32 eine Druckfedereinrichtung 50 auf, welche wenigstens eine Druckfeder 52 aufweist. Die Druckfeder 52 verbindet oder koppelt dabei die Nabe 40 und den Flansch 38.

In der Nulllage, wie sie in Fig. 6 gezeigt ist, kann ein Winkel α zwischen der Blattfedereinrichtung 42, die an der Nabe 40 fest verbunden ist, und dem Flansch 38 auftreten. Die Druckfedereinrichtung 50, die zwischen der Nabe 40 und dem Flansch 38 angeordnet oder befestigt ist, ist dabei z.B. schon vorgespannt.

Fig. 7 zeigt ebenfalls eine schematische und vereinfachte Darstellung des Zusammenwirkens des Flansches 38 und der Nabe 40 der Kupplungseinrichtung 10 gemäß Fig. 6. Dabei ist die mehrstufige Drehmomentfühlereinrichtung 30 oder die mehrstufige Torsionsfedereinrichtung 32, hier dreistufige Torsionsfedereinrichtung 32, vorgesehen.

Fig. 7 zeigt dabei den Torsionsfederzustand der Torsionsfedereinrichtung 32 bei einem kleinen Winkel, d.h. einem Winkel der z.B. kleiner als der Winkel α zwischen der Blattfeder 46 und dem Flansch 38 ist. Bei einer Verdrehung des Flanschs 38 um einen kleinen Winkel ist die Steifigkeit der Torsionsfedereinrichtung 32 gering, weil nur die Druckfeder 52 der Druckfedereinrichtung 50 wirkt, wie in Fig. 7 gezeigt ist, nicht aber die Blattfeder 46 der Blattfedereinrichtung 42.

Fig. 8 zeigt die schematische und vereinfachte Darstellung des Zusammenwirkens des Flansches 38 und der Nabe 40 der Kupplungseinrichtung 10 gemäß Fig. 7. Hierbei ist ebenfalls die mehrstufige Drehmomentfühlereinrichtung 30 oder die mehrstufige Torsionsfedereinrichtung 32, hier dreistufige Torsionsfedereinrichtung 32, vorgesehen.

Genauer gesagt zeigt Fig. 8 den Torsionsfederzustand nun bei einem Winkel der größer als der Winkel α und kleiner als ein Winkel β zwischen der Blattfeder 46 der Blattfedereinrichtung 42 und dem Flansch 38 ist. Wie aus Fig. 6 und 8 dabei entnommen werden kann, trifft die Blattfeder 46 der Blattfedereinrichtung 42 den Flansch 38 ab einem Winkel α, was die Steifigkeit deutlich erhöht. Die Blattfeder 46 bildet mit der Nabe 40 hierbei einen ersten Kontakt oder Kontaktbereich 54, dort wo sie z.B. an der Nabe 40 gelagert oder befestigt ist. Des Weiteren bildet die Blattfeder 46 einen zweiten Kontakt oder Kontaktbereich 56 mit dem Flansch 38, dort wo sie den Flansch 38 berührt, wenn, wie in Fig. 8 gezeigt ist, der Flansch 38 relativ zu der Nabe 40 um einem Winkel gedreht ist, welcher größer als der Winkel α und kleiner als ein Winkel β ist. Dabei wirkt außerdem die Druckfeder 52 der Druckfedereinrichtung 50, wie in Fig. 8 gezeigt ist.

In Fig. 9 ist die schematische und vereinfachte Darstellung des Zusammenwirkens des Flansches 38 und der Nabe 40 der Kupplungseinrichtung 10 gemäß Fig. 8 dargestellt. Dabei ist die mehrstufige Drehmomentfühlereinrichtung 30 oder die mehrstufige Torsionsfedereinrichtung 32, hier dreistufige Torsionsfedereinrichtung 32, vorgesehen.

Fig. 9 zeigt hierbei den Torsionszustand bei einem Winkel der größer ist als der Winkel β zwischen der Blattfeder 46 der Blattfedereinrichtung 42 und dem Flansch 38. Die Lagerung der Blattfeder 46 der Blattfedereinrichtung 42 ändert sich ab dem Winkel β zwischen der Blattfeder 46 und dem Flansch 38, wie in Fig. 9 gezeigt ist. Die in Fig. 9 beispielhaft dargestellte Blattfeder 46 der Blattfedereinrichtung 42 berührt nun auf der Nabe 40 einen dritten Kontaktbereich 58 (dritter Kontakt). Die Biegung der Blattfeder 46 wird dadurch sehr schwierig, was eine hohe Torsionssteifigkeit ergibt.

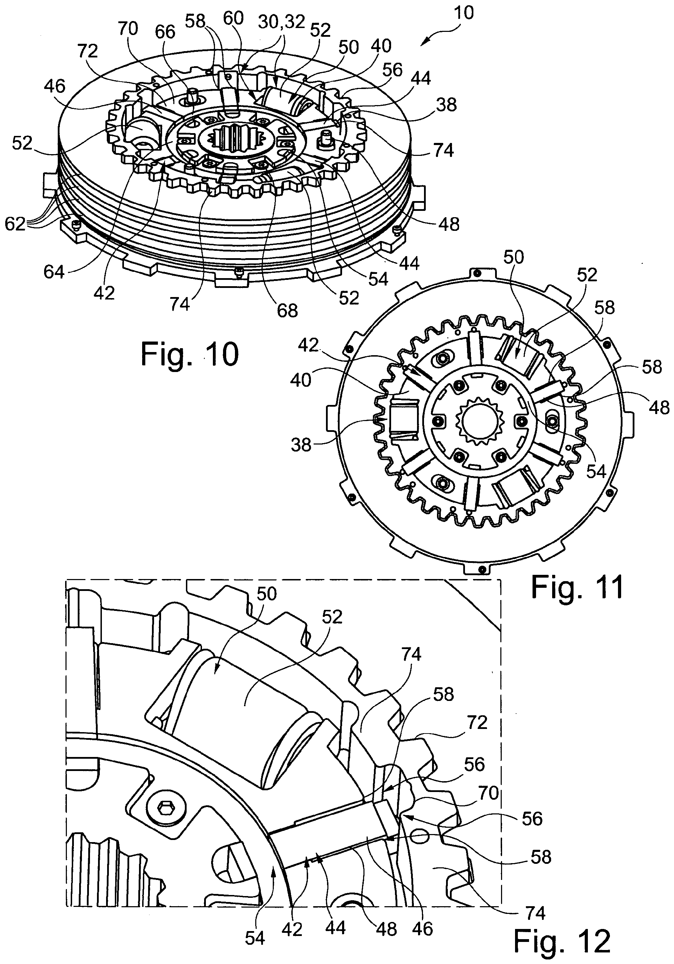

Fig. 10 zeigt nun eine Perspektivansicht einer Ausführungsform einer Kupplungseinrichtung 10 bzw. eines Teils davon, welche z.B. eine erste Kupplung, hier eine Vorsteuerkupplung, und eine zweite Kupplung, hier eine Hauptkupplung aufweisen kann, welche außerdem über ein Rampensystem mit z.B. einer ersten und zweiten Rampe über Wälzkörper miteinander verbunden sein können. Die Kupplungseinrichtung 10 weist dabei beispielsweise eine dreistufige Torsionsfedereinrichtung 32 auf, deren Prinzip zuvor insbesondere anhand der Figuren 5 bis 9 erläutert wurde.

Die in Fig. 10 gezeigte Kupplungseinrichtung 10 kann dabei eine Kupplungseinrichtung wie z.B. eine Booster-Kupplungseinrichtung, beispielsweise für ein Motorrad sein, und bildet eine Motorradkupplungseinrichtung. Ebenso kann die Kupplungseinrichtung 10 aber auch beispielsweise für einen PKW, einen LKW oder ein anderes Fahrzeug ausgebildet sein. Neben dem Einsatz in einer Booster-Kupplungseinrichtung kann die im Folgenden beschriebene mehrstufige Torsionsfedereinrichtung 32 oder Drehmomentfühlereinrichtung 30 aber auch bei anderen konventionellen Kupplungseinrichtungen eingesetzt werden, beispielsweise Kupplungseinrichtungen mit einer gedämpften Scheibe oder bei jeder andere Kupplungseinrichtung, welche geeignet ist zur Verwendung mit der mehrstufigen Torsionsfeder- bzw. Drehmomentfühlereinrichtung 32, 30.

Wie in Fig. 10 gezeigt ist, weist die Kupplungseinrichtung 10 beispielsweise einen Kupplungsflansch 38 auf und eine Kupplungsnabe 40. Dabei ist in der Kupplungsnabe 40 eine Blattfedereinrichtung 42 vorgesehen, wobei in entsprechenden Blattfederaufnahmen 48 der Kupplungsnabe 40 ein oder hier mehrere Blattfedern 46 (Blattfederpaket 44) aufgenommen und gelagert bzw. befestigt sind. Des Weiteren ist eine Druckfedereinrichtung 50 vorgesehen, wobei mehrere Druckfedern 52 in Druckfederaufnahmen 60 z.B. in der Kupplungsnabe 40 aufgenommen sind und die Kupplungsnabe 40 und den Kupplungsflansch 38 verbinden bzw. koppeln.

In Fig. 11 ist eine Draufsicht auf die Kupplungseinrichtung 10 mit einem Lammelenpaket 62 gemäß Fig. 10 gezeigt. Dabei ist die Kupplungsnabe 40 gezeigt, in deren Blattfederaufnahmen 48 jeweils ein Blattfederpakt 44 aus mehreren Blattfedern 46 angeordnet und befestigt ist. Die Blattfederaufnahme 48 ist dabei z.B. in Form einer Vertiefung ausgebildet, in welche ein Blattfederpaket 44 eingelegt und mittels eines Befestigungselements 64, wie z.B. eines Befestigungsrings befestigt wird. Die Blattfedern 46 weisen dabei eine Aufnahme 66 für den Befestigungsring 64 auf, z.B. in Form einer Vertiefung, in welcher der Befestigungsring 64 aufgenommen wird. Der Befestigungsring 64 wird dabei außerdem an der Kupplungsnabe 40 befestigt, z.B. mittels Schrauben 68. Das Blattfederpakt 44 steht nun aus der jeweiligen Blattfederaufnahme 48 der Kupplungsnabe 40 hervor und kann mit einem ersten und zweiten Kontaktabschnitt 70, 72 des Kupplungsflansches 38 in Kontakt gebracht werden, um den zweiten und dritten Kontakt 56, 58 zu bilden, wenn der Kupplungsflansch 38 und die Kupplungsnabe 40 relativ zueinander gedreht oder verdreht werden, wie zuvor mit Bezug auf die Figuren 5 bis 9 beschrieben wurde. Das Blattfederpaket 44 bildet mit seiner Befestigung in der Blattfederaufnahme 48 sozusagen einen ersten Kontakt 54, wie er zuvor auch mit Bezug auf die Fig. 6 und 7 beschrieben wurde.

Das jeweilige Blattfederpakt 44 kann dabei mit dem Kupplungsflansch 38 einen sog. zweiten Kontakt 56 und mit der Kupplungsnabe 40 einen sog. dritten Kontakt 58 bilden, je nachdem wie weit der Flansch 38 und die Nabe 40 entsprechend relativ zueinander gedreht bzw. verdreht sind.

Im Fall, dass nur ein sog. erster Kontakt 54 vorliegt, wie zuvor mit Bezug auf Fig. 6 und 7 beschrieben wurde, ist der Winkel zwischen der Blattfedereinrichtung 42 und dem Kupplungsflansch 38 kleiner oder gleich dem Winkel α. In diesem Fall wirken nur die Druckfedern 52, wenn sie von oder zwischen dem Kupplungsflansch 38 und der Kupplungsnabe 40 zusammengedrückt werden. Die Blattfedereinrichtung 42 bzw. die Blattfederpakete 44 wirken in diesem Fall nicht, wie zuvor auch anhand der Fig. 6 und 7 erläutert wurde.

Zur Bereitstellung eines zusätzlichen zweiten Kontakts 56 zwischen dem Blattfederpakt 44 und dem Kupplungsflansch 38 weist der Kupplungsflansch 38 beispielsweise einen Anschlag 74 auf, welcher durch eine Vertiefung oder Aussparung, wie in Fig. 10 gezeigt ist, oder einen Vorsprung, wie in den Fig. 6 bis 9 gezeigt ist, gebildet wird. Der zweite Kontakt 56 ergibt sich dabei bei einem Kontakt des Blattfederpaktes 44 mit dem Anschlag 74 des Kupplungsflansches 38, hier mit der Seitenwand der Vertiefung in dem Flansch 38 oder der Seitenwand des Vorsprungs in den Figuren 6 bis 9. Der Fall, des vorliegendes von zwei Kontakten 54, 56 wurde zuvor auch mit Bezug auf Fig. 8 erläutert. In diesem Fall ist der Winkel zwischen der Blattfedereinrichtung 42 und dem Kupplungsflansch 38 größer als der Winkel α und kleiner als der Winkel β. Hierbei wirken auch die Druckfedern 52, da sie durch die Kupplungsnabe 40 und den Kupplungsflansch 38 weiter zusammengedrückt werden.

Ein dritter Kontakt 58 ergibt sich dann, wenn die Kupplungsnabe 40 und der Kupplungsflansch 38 derart zueinander gedreht oder verdreht sind, so dass das Blattfederpakt 44 zusätzlich die Kupplungsnabe 40 berührt, beispielsweise am oberen Ende der Blattfederaufnahme 48 der Kupplungsnabe 40, wie in nachfolgender Fig. 12 mit einer gestrichelten Linie angedeutet ist. Der Fall, in welchem drei Kontakte 54, 56, 58 vorliegen wurde zuvor exemplarisch mit Bezug auf Fig. 9 erläutert. In diesem Fall ist der Winkel zwischen der Blattfedereinrichtung 42 und dem Kupplungsflansch 38 größer als der Winkel β. Dadurch ergibt sich eine hohe Torsionssteifigkeit. Außerdem wirken in diesem Fall die Druckfedern 52, welche durch die Kupplungsnabe 40 und den Kupplungsflansch 38 zusammengedrückt werden.

In Fig. 12 ist ein vergrößerter Ausschnitt der Kupplungseinrichtung 10 gemäß Fig. 10 und 11 gezeigt. In dem Ausschnitt ist eine Blattfederaufnahme 48 der Kupplungsnabe 40 gezeigt, in welcher ein Blattfederpaket 44 aus mehreren Blattfedern 46 angeordnet ist. Die Blattfedern 46 sind dabei in der Aufnahme 48 über ein Befestigungselement 64, wie hier den Befestigungsring befestigt, wobei der Befestigungsring 84 dabei in einer Aufnahme 66 in Form z.B. einer Aussparung oder Vertiefung des Blattfederpakets 44 geführt und mit der Kupplungsnabe 40 verschraubt ist. Das Blattfederpakt 44 steht dabei aus der Blattfederaufnahme 48 hervor in eine Aufnahme in Form einer Vertiefung in dem Kupplungsflansch 38. Des Weiteren ist eine Druckfeder 52 einer Druckfedereinrichtung 50 gezeigt, welche so angeordnet ist, dass sie auf einer Seite durch den Kupplungsflansch 38 und auf der anderen Seite durch die Kupplungsnabe 40 zusammendrückbar ist. In Fig. 12 ist die Torsionsfedereinrichtung 32, welche die Blattfedereinrichtung 42 und die Druckfedereinrichtung 50 aufweist, in einer Nulllage, in welcher, wenn z.B. nur die Druckfedereinrichtung 50 wirkt, d.h. die Druckfedern 52 durch den Kupplungsflansch 38 und die Kupplungsnabe 40 zusammengedrückt werden. Fig. 12 zeigt also den zuvor mit Bezug auf die Fig. 6 und 7 beschriebenen Fall, in welchem der Winkel zwischen der Blattfedereinrichtung 42 und dem Kupplungsflansch 38 kleiner oder gleich dem Winkel α ist. In diesem Fall wirken wenn dann nur die Druckfedern 52, wenn sie von oder zwischen dem Kupplungsflansch 38 und der Kupplungsnabe 40 zusammengedrückt werden. Die Blattfedereinrichtung 42 bzw. die Blattfederpakete 44 wirken in diesem Fall nicht, wie zuvor auch anhand der Fig. 6 und 7 erläutert wurde. Mit einer gestrichelten Linie ist außerdem der Fall angedeutet, wenn drei Kontakte 54, 56, 58 vorliegen und die Blattfedereinrichtung 42 bzw. deren jeweiliges Blattfederpaket 44 einmal mit dem Anschlag des Kupplungsflansches 38 in Berührung ist und einmal zusätzlich mit der Kupplungsnabe 40, beispielsweise hier dem Ende der Blattfederaufnahme 48 der Kupplungsnabe 40.

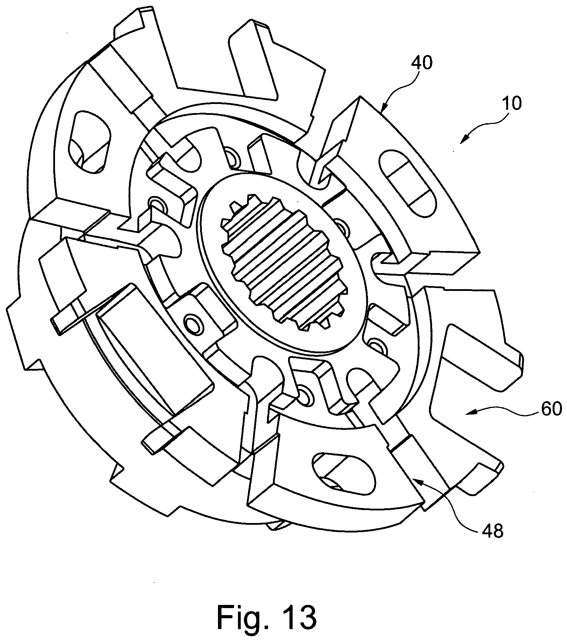

In Fig. 13 ist die Kupplungsnabe 40 gemäß der Fig. 10 bis 12 in einer Perspektivansicht gezeigt, ohne Torsionsfedereinrichtung und Kupplungsflansch. Dabei sind in Fig. 13 einmal die Aufnahmen 48 für die Blattfederpakte der Blattfedereinrichtung und die Aufnahmen 60 für die Druckfedern der Druckfedereinrichtung gezeigt. Die Kupplungsnabe 40 kann dabei mit dem Getriebe der Hauptkupplung z.B. einer Booster-Kupplungseinrichtung verbunden werden, ebenso wie der Kupplungsflansch (nicht dargestellt). Ein Lamellenpaket (nicht dargestellt), welches mit dem Kupplungsflansch verbunden ist gehört dabei beispielsweise zur Hauptkupplung. Ein Motordrehmoment eines Motors kann dabei über das Lamellenpaket auf den Kupplungsflansch, von diesem über die Torsionsfedereinrichtung mit ihrer Druckfedereinrichtung und Blattfedereinrichtung auf die Kupplungsnabe und von dort auf das Getriebe übertragen werden.

Die Erfindung ist, wie zuvor beschrieben, auf eine Booster-Kupplung nicht beschränkt sondern kann auch bei anderen Kupplungen verwirklich werden, diese müssen dabei nicht notwendigerweise eine erste Kupplung bzw. Vorsteuerkupplung und eine zweite Kupplung oder Hauptkupplung aufweisen. Außerdem muss die Kupplung nicht notwendigerweise ein Rampensystem aufweisen mit Wälzkörpern.

Mit der Erhöhung des Motordrehmoments wird die Anpresskraft (und infolgedessen die Ausrückkraft) immer größer, was den Fahrkomfort verschlechtert. Die Erwartung von kostengünstigen Systemen, die eine Reduzierung der Ausrückkraft bringen würde, ist daher erheblich. Aus diesem Grund hat die Booster-Kupplung eine große Chance, Erfolg zu erzielen und ist daher für die Erfindung von Interesse, ohne darauf jedoch beschränkt zu sein. Dennoch soll dieses System keine (oder wenige) Nebeneffekte verursachen, die den Fahrkomfort verschlechtern könnten.

Boosterkupplungen können bei Lastwechseln empfindlich reagieren und ihre Kugelrampe kann sich verklemmen. Daher wird, wie zuvor beschrieben ein Drehmomentfühler in der Hauptkupplung eingesetzt, der praktisch eine Torsionsfeder ist, deren Moment-Winkel Kennlinie der Belagskennlinie (exponentielle Kennlinie) entspricht oder dieser soweit als möglich angenähert ist, wie in Fig. 5 angedeutet ist. Konstruktiv wird diese Kennlinie mittels einer Druckfeder-Blattfeder Kombination erzeugt. So kann sich die Kugelrampe sauber lösen. Um das Verhalten bei Lastwechseln und das Zug-Schub Verhalten bei einer solchen Booster-Kupplung zu verbessern wird hierbei die Anpresskraft der Hauptkupplung dem zu übertragenden Motordrehmoment so genau wie möglich anpasst.

Wie zuvor beschrieben kann eine Konstruktion aus eine Kombination von Blattfedern und Druckfedern bestehen, die eine dreistufige Kennlinie B bilden, wie zuvor in Fig. 5 gezeigt wurde. Neben einer dreistufigen Kennlinie kann auch eine zweistufige Kennlinie funktionieren, bei welcher die Blattfedereinrichtung oder deren wenigstens eine Blattfeder so an der Kupplungsnabe vorgesehen ist, dass sich nur ein zweiter Kontakt aber kein dritter Kontakt ergibt. D.h. die Blattfedereinrichtung ist so an der Kupplungsnabe angeordnet, dass sie zwar mit dem Kupplungsflansch in Berührung kommen kann (2. Kontakt), wenn der Kupplungsflansch und die Kupplungsnabe ausreichend zu einander gedreht bzw. verdreht sind, es aber nicht zu einem dritten Kontakt kommt, bei welchem die Blattfedereinrichtung zusätzlich mit der Kupplungsnabe in Kontakt kommt, wenn der Kupplungsflansch und die Kupplungsnabe weiter zueinander gedreht bzw. verdreht werden.

Prinzipiell ist auch eine Kennlinie mit mehr als drei Stufen denkbar. In einer weiteren Ausführungsform ist es auch möglich, die Eigensteifigkeit des Flansches bzw. Kupplungsflansches und/oder der Nabe bzw. der Kupplungsnabe zu variieren, wodurch die Blattfedern entfallen können aber nicht müssen.

### Bezugszeichenliste

- 10: Kupplungseinrichtung
- 12: erste Kupplung bzw. Vorsteuerkupplung
- 14: zweite Kupplung bzw. Hauptkupplung
- 16: Rampensystem
- 18: Wälzkörper
- 20: Motor
- 22: erste Rampe
- 24: zweite Rampe
- 26: Getriebe
- 28: Drehmomentverteilung
- 30: Drehmomentfühler(-einrichtung)
- 32: Torsionsfedereinrichtung
- 34: Torsionsfederkennlinie
- 36: Anpressplatte
- 38: Kupplungsflansch
- 40: Kupplungsnabe
- 42: Blattfedereinrichtung
- 44: Blattfederpaket
- 46: Blattfeder
- 48: Blattfederaufnahme
- 50: Druckfedereinrichtung
- 52: Druckfeder
- 54: 1. Kontakt
- 56: 2. Kontakt
- 58: 3. Kontakt
- 60: Druckfederaufnahme
- 62: Lamellenpaket
- 64: Befestigungselement
- 66: Aufnahme
- 68: Schraube
- 70: 1. Kontaktabschnitt
- 72: 2. Kontaktabschnitt
- 74: Anschlag

## Patentansprüche

1. Kupplungseinrichtung (10), aufweisend eine Vorsteuerkupplung (12) und eine durch ein Rampensystem über Wälzkörper zur Reduzierung einer Ausrückkraft mit der Vorsteuerkupplung (12) verbundene Hauptkupplung (14), **dadurch gekennzeichnet, dass** ein erstes Kupplungselement (38) und ein zweites Kupplungselement (40) mit der Hauptkupplung (14) verbunden sind, und eine Torsionsfedereinrichtung (30, 32) das erste Kupplungselement (38) und das zweite Kupplungselement (40) miteinander koppelt, wobei die Torsionsfedereinrichtung (30, 32) eine mehrstufige Federkennlinie (B) aufweist.

2. Kupplungseinrichtung nach Anspruch 1, wobei das erste Kupplungselement (38) ein Kupplungsflansch (38) ist und das zweite Kupplungselement (40) eine Kupplungsnabe (40).

3. Kupplungseinrichtung nach Anspruch 1 oder 2, wobei die Torsionsfedereinrichtung (30, 32) eine Druckfedereinrichtung (50) aufweist, welche wenigstens eine Druckfeder (52) aufweist, welche durch das erste Kupplungselement (38) bzw. den Kupplungsflansch (38) und das zweite Kupplungselement (40) bzw. die Kupplungsnabe (40) zusammendrückbar in der Kupplungseinrichtung (10) vorgesehen ist.

4. Kupplungseinrichtung nach einem der Ansprüche 1 bis 3, wobei die Torsionsfedereinrichtung (30, 32) eine Blattfedereinrichtung (32) aufweist, wobei die Blattfedereinrichtung (32) in einem der Kupplungselemente (38, 40), insbesondere an der Kupplungsnabe (40) vorgesehen ist, und insbesondere wenigstens ein Blattfederpakt (44) bestehend aus wenigstens einer Blattfeder (46) aufweist.

5. Kupplungseinrichtung nach Anspruch 4, wobei die Blattfedereinrichtung (42) derart mit dem einen Kupplungselement (38, 40), insbesondere der Kupplungsnabe (40), verbunden ist, so dass sie bei einer zweistufigen Federkennlinie der Torsionsfedereinrichtung (30, 32) mit dem anderen Kupplungselement 40, 38), insbesondere dem Kupplungsflansch (38), in Kontakt (56) bringbar ist.

6. Kupplungseinrichtung nach Anspruch 4, wobei die Blattfedereinrichtung (42) derart mit dem Kupplungselement (38, 40), insbesondere mit der Kupplungsnabe (40) verbunden ist, so dass sie bei einer dreistufigen Federkennlinie (B) der Torsionsfedereinrichtung (32) mit dem anderen Kupplungselement (40, 38), insbesondere dem Kupplungsflansch (38) in Kontakt (56) bringbar und außerdem mit dem Kupplungselement (40), insbesondere der Kupplungsnabe (40), in Kontakt (58) bringbar ist.

7. Kupplungseinrichtung nach einem der Ansprüche 4 bis 6, wobei ein Kupplungselement (38, 40), insbesondere die Kupplungsnabe (40), eine jeweilige Blattfederaufnahme (48) aufweist, wobei die Blattfederaufnahme (48) als eine Vertiefung ausgebildet ist, in welcher die Blattfedereinrichtung (42) aufgenommen und befestigt ist, wobei die Blattfedereinrichtung (42) aus der Blattfederaufnahme (38) heraussteht, um mit einem Anschlag (74) des anderen Kupplungselements (38, 40), insbesondere des Kupplungsflansches (38) in Kontakt bringbar zu sein, wobei der Anschlag (74) des Kupplungselements als ein Vorsprung oder eine Vertiefung bzw. Aussparung ausgebildet ist.

8. Kupplungseinrichtung nach einem der Ansprüche 5 bis 7, wobei die Aufnahme (48) der Blattfedereinrichtung (42) bei einer dreistufigen Federkennlinie (B) der Torsionsfedereinrichtung (30, 32) außerdem einen Kontaktbereich aufweist, mit welchem die Blattfedereinrichtung (42) zusätzlich zu einem Kontakt (56) mit dem einen Kupplungselement (38, 40), insbesondere dem Kupplungsflansch (38), in Kontakt (58) mit dem Kontaktbereich des anderen Kupplungselements (40), insbesondere der Kupplungsnabe (40), bringbar ist.

9. Kupplungseinrichtung nach einem der Ansprüche 1 bis 8, wobei die Eigensteifigkeit eines oder beider Kupplungselemente (38, 40) bzw. des Kupplungsflansches (38) und/oder der Kupplungsnabe (40) variabel ausgebildet ist.

10. Kupplungseinrichtung nach einem der Ansprüche 1 bis 9, wobei die Federkennlinie (B) der Torsionsfedereinrichtung (30, 32) einer Belagkennlinie oder einer exponentiell verlaufenden Kennlinie entspricht oder angenähert ist.

## Claims

1. Clutch device (10), having a pilot control clutch (12) and a main clutch (14) which is connected to the pilot control clutch (12) by way of a ramp system via rolling bodies for reducing a release force, **characterized in that** a first clutch element (38) and a second clutch element (40) are connected to the main clutch (14), and a torsion spring device (30, 32) couples the first clutch element (38) and the second clutch element (40) to one another, the torsion spring device (30, 32) having a multiple-stage spring characteristic (B).

2. Clutch device according to Claim 1, the first clutch element (38) being a clutch flange (38) and the second clutch element (40) being a clutch hub (40).

3. Clutch device according to Claim 1 or 2, the torsion spring device (30, 32) having a compression spring device (50) which has at least one compression spring (52) which is provided in the clutch device (10) such that it can be compressed by way of the first clutch element (38) or the clutch flange (38) and the second clutch element (40) or the clutch hub (40).

4. Clutch device according to one of Claims 1 to 3, the torsion spring device (30, 32) having a leaf spring device (32), the leaf spring device (32) being provided in one of the clutch elements (38, 40), in particular on the clutch hub (40), and having, in particular, at least one leaf spring assembly (44) consisting of at least one leaf spring (46).

5. Clutch device according to Claim 4, the leaf spring device (42) being connected to the one clutch element (38, 40), in particular the clutch hub (40), such that, in the case of a two-stage spring characteristic of the torsion spring device (30, 32), it can be brought into contact (56) with the other clutch element (40, 38), in particular the clutch flange (38).

6. Clutch device according to Claim 4, the leaf spring device (42) being connected to the clutch element (38, 40), in particular to the clutch hub (40), such that, in the case of a three-stage spring characteristic (B) of the torsion spring device (32), it can be brought into contact (56) with the other clutch element (40, 38), in particular the clutch flange (38), and, moreover, can be brought into contact (58) with the clutch element (40), in particular the clutch hub (40).

7. Clutch device according to one of Claims 4 to 6, a clutch element (38, 40), in particular the clutch hub (40), having a respective leaf spring support (48), the leaf spring support (48) being configured as a depression, in which the leaf spring device (42) is received and fastened, the leaf spring device (42) projecting out of the leaf spring support (38), in order for it to be possible to be brought into contact with the stop (74) of the other clutch element (38, 40), in particular of the clutch flange (38), the stop (74) of the clutch element being configured as a projection or a depression or cut-out.

8. Clutch device according to one of Claims 5 to 7, the support (48) of the leaf spring device (42) having a contact region, moreover, in the case of a three-stage spring characteristic (B) of the torsion spring device (30, 32), by way of which contact region the leaf spring device (42) can be brought into contact (58) with the contact region of the other clutch element (40), in particular the clutch hub (40), in addition to a contact (56) with the one clutch element (38, 40), in particular the clutch flange (38).

9. Clutch device according to one of Claims 1 to 8, the inherent stiffness of one or both clutch elements (38, 40) or of the clutch flange (38) and/or the clutch hub (40) being of variable configuration.

10. Clutch device according to one of Claims 1 to 9, the spring characteristic (B) of the torsion spring device (30, 32) corresponding or being approximated to a lining characteristic or an exponentially running characteristic.

## Revendications

1. Dispositif d'embrayage (10), comportant un embrayage de précommande (12) et un embrayage principal (14) relié à l'embrayage de précommande (12) par un système de rampe, par le biais de corps de rouleau servant à réduire une force de débrayage, **caractérisé en ce qu'**un premier élément d'embrayage (38) et un deuxième élément d'embrayage (40) sont reliés à l'embrayage principal (14) et qu'un dispositif de ressort de torsion (30, 32) couple entre eux le premier élément d'embrayage (38) et le deuxième élément d'embrayage (40), le dispositif de ressort de torsion (30, 32) comportant une courbe caractéristique de ressort (B) à plusieurs paliers.

2. Dispositif d'embrayage selon la revendication 1, le premier élément d'embrayage (38) étant un flasque d'embrayage (38) et le deuxième élément d'embrayage (40) étant un moyeu d'embrayage (40).

3. Dispositif d'embrayage selon la revendication 1 ou 2, le dispositif de ressort de torsion (30, 32) comportant un dispositif de ressort de pression (50) comportant au moins un ressort de pression (52) prévu de façon à pouvoir être ramené par compression dans le dispositif d'embrayage (10) par le premier élément d'embrayage (38) et/ou le flasque d'embrayage (38) et le deuxième élément d'embrayage (40) et/ou le moyeu d'embrayage (40).

4. Dispositif d'embrayage selon l'une quelconque des revendications 1 à 3, le dispositif de ressort de torsion (30, 32) comportant un dispositif de ressort à lames (32), le dispositif de ressort à lames (32) étant prévu dans un des éléments d'embrayage (38, 40), notamment au niveau du moyeu d'embrayage (40) et comportant notamment au moins un paquet de ressort à lames (44) composé d'au moins un ressort à lames (46).

5. Dispositif d'embrayage selon la revendication 4, le dispositif de ressort à lames (42) étant relié de telle sorte au premier élément d'embrayage (38, 40), notamment au moyeu d'embrayage (40), qu'il peut être amené, en présence d'une courbe caractéristique de ressort à deux paliers du dispositif de ressort de torsion (30, 32), en contact (56) avec l'autre élément d'embrayage (40, 38), notamment le flasque d'embrayage (38).

6. Dispositif d'embrayage selon la revendication 4, le dispositif de ressort à lames (42) étant relié de telle sorte à l'élément d'embrayage (38, 40), notamment au moyeu d'embrayage (40), qu'il peut être amené, en présence d'une courbe caractéristique de ressort (B) à trois paliers du dispositif de ressort de torsion (32), en contact (56) avec l'autre élément d'embrayage (40, 38), notamment le flasque d'embrayage (38), et qu'il peut en outre être amené en contact (58) avec l'élément d'embrayage (40), notamment le moyeu d'embrayage (40).

7. Dispositif d'embrayage selon l'une quelconque des revendications 4 à 6, un élément d'embrayage (38, 40), notamment le moyeu d'embrayage (40), comportant un logement de ressort à lames (48) respectif, le logement de ressort à lames (48) prenant la forme d'un renfoncement dans lequel le dispositif de ressort à lames (42) est logé et fixé, le dispositif de ressort à lames (42) ressortant du logement de ressort à lames (38) de façon à pouvoir être amené en contact avec une butée (74) de l'autre élément d'embrayage (38, 40), notamment le flasque d'embrayage (38), la butée (74) de l'élément d'embrayage étant réalisée sous la forme d'une saillie ou d'un renfoncement et/ou d'un évidement.

8. Dispositif d'embrayage selon l'une quelconque des revendications 5 à 7, le logement (48) du dispositif de ressort à lames (42) comportant en outre, en présence d'une courbe caractéristique de ressort (B) à trois paliers du dispositif de ressort de torsion (30, 32), une zone de contact avec laquelle le dispositif de ressort à lames (42) peut être amené en contact (58), avec la zone de contact de l'autre élément d'embrayage (40), notamment le moyeu d'embrayage (40), en sus d'un contact (56) avec le premier élément d'embrayage (38, 40), notamment le flasque d'embrayage (38).

9. Dispositif d'embrayage selon l'une quelconque des revendications 1 à 8, la rigidité propre d'un des éléments d'embrayage (38, 40) ou des deux et/ou du flasque d'embrayage (38) et/ou du moyeu d'embrayage (40) étant réalisée de façon à pouvoir varier.

10. Dispositif d'embrayage selon l'une quelconque des revendications 1 à 9, la courbe caractéristique de ressort (B) du dispositif de ressort de torsion (30, 32) correspondant à la courbe caractéristique de revêtement ou à une courbe caractéristique s'étendant de façon exponentielle ou s'approchant de celles-ci.
